# EUROPEAN PATENT APPLICATION

(11) **EP 4 836 392 A1**
(43) Date of publication of application: **04.11.2026**
(21) Application number: 26172949.5
(22) Date of filing: 17.04.2026
(51) Int. Cl.: H04N 1/00, G03G 15/08, G03G 21/00, G03G 21/10

(54) **DEVELOPING DEVICE AND IMAGE FORMING APPARATUS**

(30) Priority: 01.05.2025 JP 2025076043
(71) Applicant: KYOCERA Document Solutions Inc., Osaka-shi, Osaka 540-8585 (JP)
(72) Inventor: KITAGAWA, Hiroaki, Osaka-shi, Osaka 540-8585 (JP)
(74) Representative: Becker Kurig & Partner Patentanwälte mbB

(57) **Abstract**

A developing device includes a developing housing, a shutter, and a collection part. The developing housing has a replenishment port formed on an upper surface and contains a developer flowing into through the replenishment port. The shutter is provided on the upper surface of the developing housing and moves between a closed position for closing the replenishment port and an opening position for opening the replenishment port. The collection part is formed at least along an edge of the replenishment port on a downstream side of a movement direction of the shutter toward the closed position. When the shutter moves toward the closed position while pressing a contaminated developer which is the developer adhered to the upper surface of the developing housing, the contaminated developer is collected by the collection part.

## Description

### BACKGROUND

The present disclosure relates to a developing device and an image forming apparatus.

An electrophotographic image forming apparatus includes a developing device which forms a toner image on a surface of an image carrier. The developing device includes a developing device body which stores toner. An intake opening for receiving the toner is formed in the top plate of the developing device body. When a toner cartridge is installed in the developing device, the toner is filled into the inside of the developing device body from the toner cartridge via the intake opening.

### SUMMARY

A developing device according to the present disclosure includes a developing housing, a shutter, and a collection part. The developing housing has a replenishment port formed on an upper surface and contains a developer flowing into through the replenishment port. The shutter is provided on the upper surface of the developing housing and moves between a closed position for closing the replenishment port and an opening position for opening the replenishment port. The collection part is formed at least along an edge of the replenishment port on a downstream side of a movement direction of the shutter toward the closed position. When the shutter moves toward the closed position while pressing a contaminated developer which is the developer adhered to the upper surface of the developing housing, the contaminated developer is collected by the collection part.

An image forming apparatus according to the present disclosure includes the developing device.

### BRIEF DESCRIPTION OF THE DRAWINGS

FIG. 1 is a cross-sectional view (front view) showing an inner structure of an image forming apparatus according to one embodiment of the present disclosure.
FIG. 2 is a perspective view showing a developing device and a container according to the embodiment of the present disclosure.
FIG. 3 is an enlarged perspective view showing a part of the top surface of the developing device according to the embodiment of the present disclosure.
FIG. 4 is a perspective view showing a shutter provided in the developing device according to the embodiment of the present disclosure.
FIG. 5 is a perspective view showing the lower portion of the shutter provided in the developing device according to the embodiment of the present disclosure.
FIG. 6 is disassembled perspective view showing a container connection portion of a container of the image forming apparatus according to the embodiment of the present disclosure.
FIG. 7 is a plan view showing a state before connecting the container to the developing device according to the embodiment of the present disclosure.
FIG. 8 is a cross-sectional view taken along the line VIII-VIII in FIG. 7.
FIG. 9 is a plan view showing a state after connecting the container to the developing device according to the embodiment of the present disclosure.
FIG. 10 is a cross-sectional view taken along the line X-X in FIG. 9.
FIG. 11 is a plan view showing a process of the shutter of the developing devices according to the embodiment of the present disclosure, moving toward a closed position.

### DETAILED DESCRIPTION

Hereinafter, with reference to the attached drawings, one embodiment of the present disclosure will be described. Fr, Rr, L, R, U, and D in the drawings indicate the front, rear, left, right, upper, and down. The front-and-rear direction, the left-and-right direction and the upper-and-down direction are orthogonal to each other. Although the terms showing the direction and position are used in the specification, they are used for convenience of description and are not intended to limit the scope of the disclosure. In the drawings, the shapes, dimensions, angles, positions, and the like of the constituent members are not necessarily accurate and are schematized for the purpose of explanation.

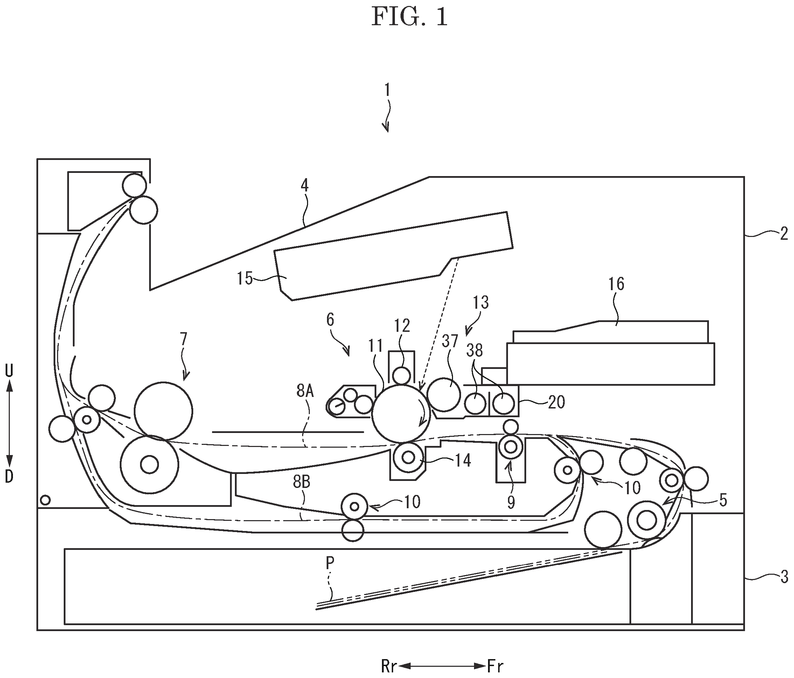

[Image Forming Apparatus] With reference to FIG. 1, the image forming apparatus 1 will be described. FIG. 1 is a cross-sectional view (front view) showing the inner structure of the image forming apparatus 1.

The image forming apparatus 1 is an electrophotographic printer. The image forming apparatus 1 includes an apparatus main body 2 having a substantially rectangular parallelepiped appearance. A paper feeding cassette 3, for example, which stores a paper P (media), is detachably provided in the lower portion of the apparatus main body 2. A discharge tray 4 is provided on the upper surface of the apparatus main body 2. The apparatus main body 2 has a metal frame and a synthetic resin member fixed to the frame. Furthermore, the paper P, as an example of the media, is not limited to a paper sheet and may also be a resin sheet, and the like.

The image forming apparatus 1 includes a paper feeding device 5, an image forming part 6, and a fixing device 7. The paper feeding device 5 provided at the upstream end portion of a conveying path 8A extending from the paper feeding cassette 3 to the discharge tray 4, and feeds the paper P stored in the paper feeding cassette 3 one by one to the conveying path 8A. The image forming part 6 is provided in the middle portion of the conveying path 8A, and forms a toner image on the conveyed paper P. The fixing device 7 is provided in the downstream portion of the conveying path 8A, and thermally fixes the toner image on the paper P.

A pair of registration rollers 9 is provided in the conveying path 8A to temporarily block the conveyed paper P and correct its skew. Below the conveying path 8A, an inversion conveying path 8B is provided, which branches from the downstream portion of the conveying path 8A and merges with the upstream portion of the conveying path 8A. On the inversion conveying path 8B, a plurality of pairs of conveying rollers 10 which conveys the paper P are provided.

The image forming part 6 includes a photosensitive drum 11, a charging device 12, a developing device 13, and a transfer roller 14. The photosensitive drum 11 is formed in a substantially cylindrical shape, and is driven by a motor (not shown) to rotate around an axis. Above the photosensitive drum 11, a light scanning device 15 which emits scanning light toward the surface of the photosensitive drum 11 is provided. The charging device 12, the developing device 13, and the transfer roller 14 are arranged around the photosensitive drum 11 in the order of the image forming process. The transfer roller 14 is into contact with the photosensitive drum 11 from below, and forms a transfer nip.

A container 16, for example, which contains a developer containing black toner, is detachably provided in the front upper portion of the apparatus main body 2. The container 16 is supported so as to be movable in the front-and-rear direction along an attachment/detachment rail (not shown) provided inside the apparatus main body 2. In a state where the container 16 is attached to the apparatus main body 2, the container 16 is connected to the front side portion of the upper surface of the developing device 13 (a developing housing 20 described later) and replenishes the developer to the developing device 13. A front cover (not shown) is provided on the front surface of the apparatus main body 2, which is opened and closed when the container 16 is attached or detached (replaced). Furthermore, in the present embodiment, the replenishment developer contained in the container 16 is a two-component developer including toner and carrier, but it may also be a one-component developer including charged toner.

[Image Forming Process] The control part (not shown) which totally controls the image forming apparatus 1 executes image formation process as follows based on image data input from an external terminal.

The charging device 12 charges the surface of the photosensitive drum 11. The light scanning device 15 emits scanning light based on the image data, and forms an electrostatic latent image on the photosensitive drum 11. The developing device 13 develops the electrostatic latent image on the photosensitive drum 11 into a toner image using the developer (toner) supplied from the container 16. The paper feeding device 5 feeds the paper P from the paper feeding cassette 3 one by one to the conveying path 8A. The paper P is conveyed along the conveying path 8A, after the skew of the paper P is corrected by the pair of registration rollers, and enters the transfer nip. The transfer roller 14 transfers the toner image from the photosensitive drum 11 to the surface of the paper P as it passes through the transfer nip. The fixing device 7 thermally fixes the toner image to the paper P. For single-sided printing, the paper P which passes through the fixing device is discharged to the discharge tray 4.

For double-sided printing, the paper P which passes through the fixing device 7 is switched back at the downstream end of the conveying path 8A and is sent to the inversion conveying path 8B. The paper P is conveyed by the pairs of conveying rollers 10, returned from the inversion conveying path 8B to the conveying path 8A, after the skew of the paper P is corrected by the pair of registration rollers 9, and is then sent to the transfer nip. Subsequently, the toner image is transferred to the paper P, thermally fixed, and the double-sided printed paper P is discharged to the discharge tray 4.

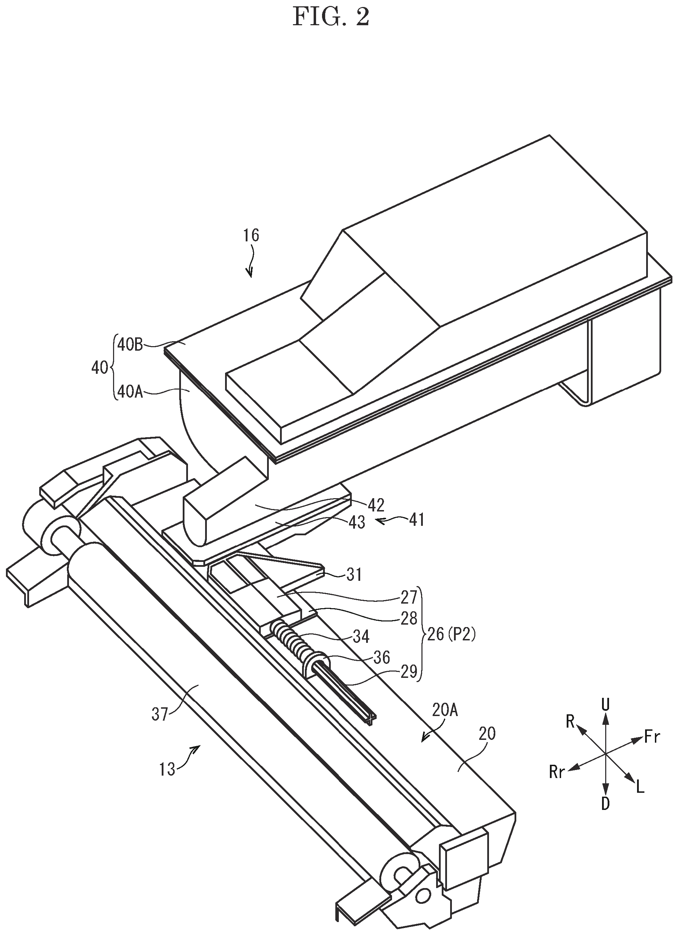

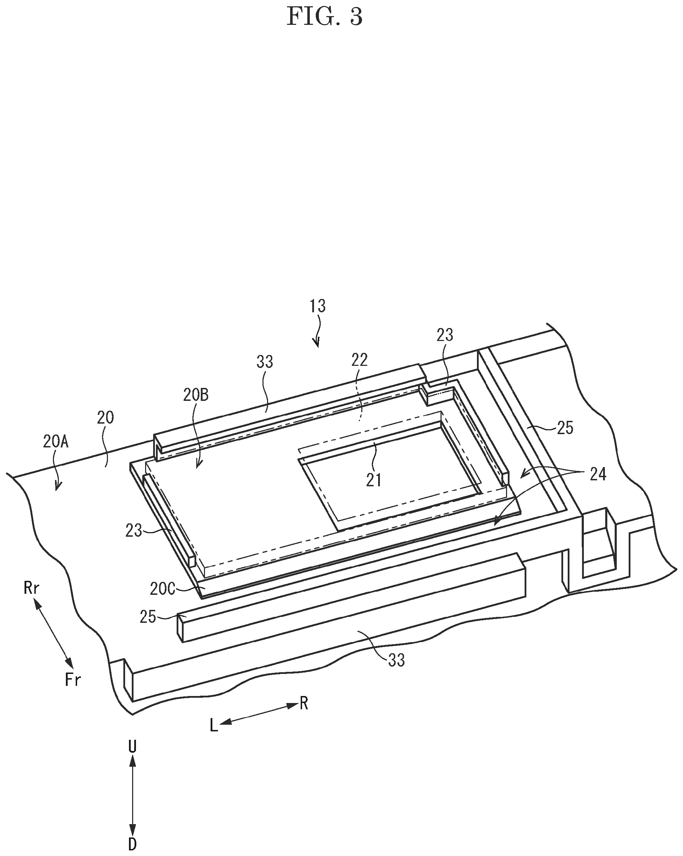

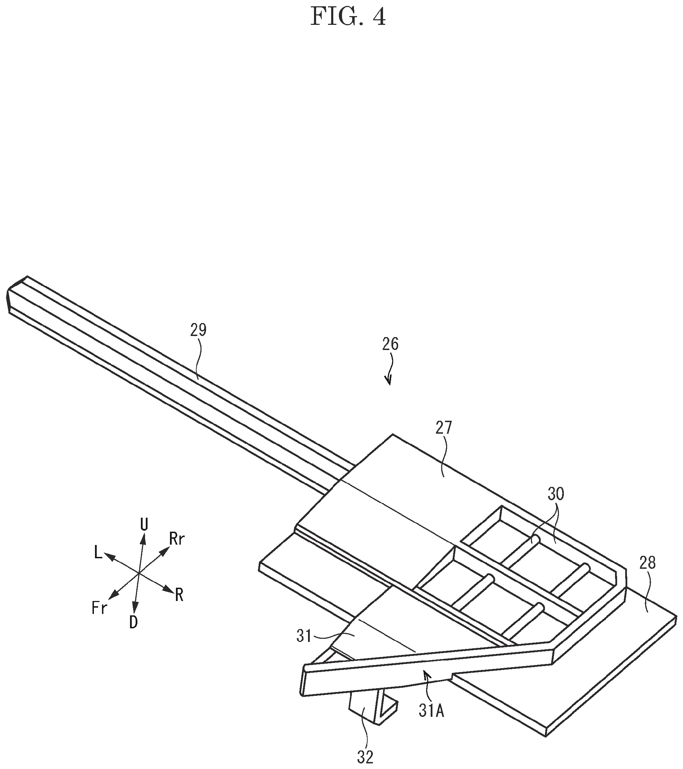

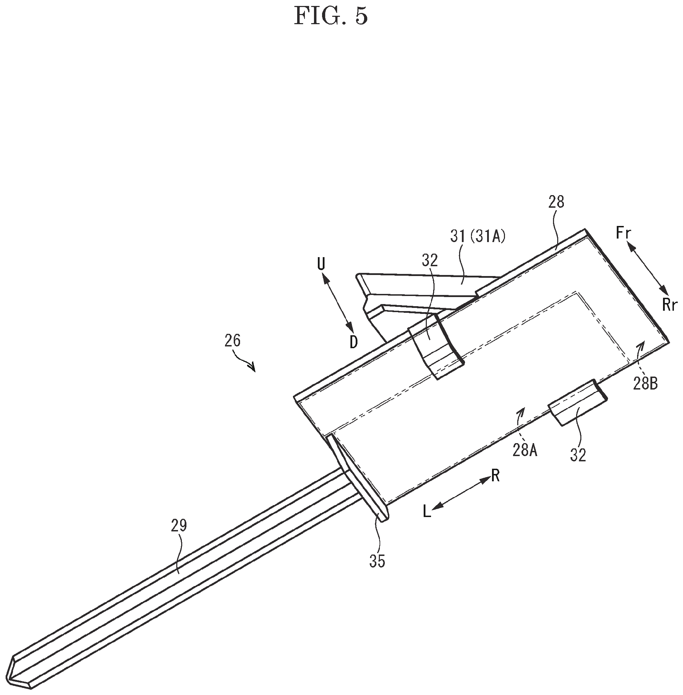

[Developing Device] With reference to FIG. 2 to FIG. 5, the developing device 13 will be described. FIG. 2 is a perspective view showing the developing device 13 and the container 16. FIG. 3 is an enlarged perspective view showing a part of the upper surface 20A of the developing device 13. FIG. 4 and FIG. 5 are perspective views showing a shutter 26 provided in the developing device 13.

As shown in FIG. 2, the developing device 13 includes a developing housing 20 which contains the developer and a developing roller 37 disposed to face the photosensitive drum 11.

<Developing Housing> The developing housing 20 is formed in a substantially parallelepiped shape elongated in the left-and-right direction. A space for containing the developer is formed inside the developing housing 20. An opening exposing a part of the developing roller 37 is formed on the rear portion of the upper surface 20A of the developing housing 20. The developing housing 20 is also equipped with a residual amount sensor (not shown) and a plurality of conveying screws 38 (see FIG. 1). The residual amount sensor detects the remaining amount of the developer contained within the developing housing 20. When the remaining amount of developer falls below a predetermined level, the developer is supplied (replenished) from the container 16 to the developing housing 20. The conveying screws 38 rotate around their axes to circulate and agitate the developer contained in the developing housing 20. The developer is charged as it is circulated and conveyed in the developing housing 20.

(Replenishment Port) A replenishment port 21 is formed in the front and right portion of the upper surface 20A of the developing housing 20. As shown in FIG. 3, the replenishment port 21 is a hole penetrating the upper plate constituting the upper surface 20A of the developing housing 20, and formed in a rectangular shape elongated in the left-and-right direction in plan view. A discharge port 45 (described later) formed in the container 16 is connected to the replenishment port 21. The developer contained in the container 16 flows into the inside of the developing housing 20 through the replenishment port 21.

(Sealing Member) A sealing member 22 is fixed to the upper surface 20A of the developing housing 20 so as to surround the replenishment port 21. The sealing member 22 is formed in a substantially rectangular ring having a rectangular opening, in plan view, to expose the replenishment port 21. The sealing member 22 has a structure (not shown) in which a felt (upper layer) is laminated on a urethane foam (lower layer) and is affixed to the upper surface 20A of the developing housing 20 using a double-sided tape (not shown). The area (fixed area 20B) where the sealing member 22 is affixed (fixed) protrudes slightly upward compared to the other areas (upper surface 20A). That is, the fixed area 20B is positioned upward relative to the upper surface 20A of the other areas via a step. A sealing rib 23 projects from the fixed area 20B, which defines the position of the sealing member 22 in the left-and-right direction. The sealing rib 23 is formed lower than the thickness of the sealing member 22. Furthermore, an inclined surface portion 20C, which is inclined downward from the rear toward the front (toward a collection part 24 described later), is formed in the front edge portion of the fixed area 20B.

In this specification, the upper surface 20A of the developing housing 20 is a concept that includes the fixed area 20B and also includes the upper surface of the sealing member 22 affixed on the fixed area 20B.

(Collection Part) The collection part 24 is formed on the upper surface 20A of the developing housing 20, along the edge of the replenishment port 21. More specifically, a collection rib 25 projects from the upper surface 20A of the developing housing 20, and faces the stepped surface of the front edge and the right edge of the fixed area 20B via a gap. The collection rib 25 is formed in a substantially L-shape viewed in plan, and forms the collection part 24 between the collection rib 25 and the stepped surface of the fixed area 20B. That is, the collection part 24 is a substantially L-shaped groove formed between the stepped surface of the fixed area 20B and the collection rib 25. As described in detail later, contaminated developer T is collected in the collection part 24. The upper end of the collection rib 25 may substantially align with the upper end of the sealing rib 23 or the upper surface of the sealing member 22 affixed to the fixed area 20B.

<Shutter> A shutter 26 which opens and closes the replenishment port 21 is provided on the upper surface 20A of the developing housing 20. As shown in FIG. 2, FIG. 4 and FIG. 5, the shutter 26 includes a shutter support portion 27, a shutter body portion 28, and a biasing support shaft 29. The shutter support portion 27, the biasing support shaft 29, and the shutter body portion 28 are integrally molded, for example, from synthetic resin.

(Shutter Support Portion) The shutter support portion 27 is formed in a substantially plate-like shape. Viewed in plan, the shutter support portion 27 is formed in a substantially rectangular shape having approximately the same size as the fixed area 20B. A lattice-shaped reinforcing rib 30 (see FIG. 4) is formed on the roughly right half of the shutter support portion 27. A contact interlocking portion 31 extends continuously from the front end portion of the shutter support portion 27. The contact interlocking portion 31 extends forward from the front end surface of the reinforcing rib 30. The contact interlocking portion 31 is formed in a substantially isosceles right triangle shape viewed in plan, and provided with a posture directing the inclined edge in the right and front direction. As will be described in detail later, during the process of attaching the container 16 to the apparatus main body 2, a portion of the container 16 is in contact with the inclined portion (interlocking inclined surface 31A) of the contact interlocking portion 31. A part of the interlocking inclined surface 31A is also formed on the reinforcing rib 30.

As shown in FIG. 4 and FIG. 5, a pair of sliders 32 are provided extending downward from the rear end surface of the reinforcing rib 30 and the contact interlocking portion 31. The pair of sliders 32 engage with a pair of slide rails 33 (see FIG. 3) formed in the developing housing 20 movably in the left-and-right direction. The shutter 26 is supported by the slide rails 33 via the sliders 32 movably in the left-and-right direction, and is moved between a closed position P1 for closing the replenishment port 21 and an open position P2 (see FIG. 2) for opening the replenishment port 21.

(Shutter Body Portion) The shutter body portion 28 is formed in a substantially flat plate shape, and is coupled to the lower surface of the shutter support portion 27. Viewed in plan, the shutter body portion 28 is formed in a substantially rectangular shape having a size approximately equal to the combined size of the fixed area 20B and the collection part 24. That is, the shutter body portion 28 is formed to have a size capable of covering the fixed area 20B and the collection part 24. The rear edge and left edge of the shutter body portion 28 are substantially aligned with those of the shutter support portion 27, and the shutter body portion 28 extends (protrudes) more forward and rightward than the shutter support portion 27.

As shown in FIG. 5, a seal contact surface 28A and a collection closing surface 28B are formed on the lower surface of the shutter body portion 28. The seal contact surface 28A is a substantially rectangular surface corresponding to the sealing member 22 (fixed area 20B). When the shutter 26 is positioned at the closed position P1, the seal contact surface 28A is in contact with the upper surface of the sealing member 22 to close the replenishment port 21. The collection closing surface 28B is a substantially L-shaped surface corresponding to the collection part 24. When the shutter 26 is positioned at the closed position P1, the collection closing surface 28B is in close contact with the upper surface of the collection rib 25 to closes the upper opening of the collection part 24.

As shown in FIG. 5, a stopper 35 is provided extending downward from the left end portion of the shutter body portion 28 (seal contact surface 28A). When the sliders 32 are disposed at the closed position P1, the stopper 35 is in contact with the left stepped surface of the fixed area 20B, and restricts the movement of the slider 32. Note that it may be considered that the rear slider 32 is provided in the shutter body portion 28.

(Biasing Support Shaft) As shown in FIG. 2, FIG. 4 and FIG. 5, the biasing support shaft 29 has a substantially cross-shaped cross section and extends leftward from the left end surface of the shutter support portion 27. As shown in FIG. 2, a bearing portion 36 is provided on the upper surface 20A of the developing housing 20, and the biasing support shaft 29 is supported by the bearing portion 36 movably in the left-and-right direction. The biasing support shaft 29 supports a biasing member 34 provided between the left end surface of the shutter support portion 27 and the right end surface of the bearing portion 36. The biasing member 34 is, for example, a compression coil spring wound around the biasing support shaft 29, and biases the shutter support portion 27 rightward. That is, the shutter 26 is biased toward the closed position P1.

<Developing Roller> As shown in FIG. 2, the developing roller 37 is formed in a cylindrical shape extending in the left-and-right direction. The developing roller 37 includes a magnetic pole member supported non-rotatably in the developing housing 20, and a developing sleeve formed around the outer periphery of the magnetic pole member and supported rotatably in the developing housing 20 (both not shown). The developing roller 37 (developing sleeve) is exposed through an opening formed on the rear upper surface of the developing housing 20 and faces the surface of the photosensitive drum 11 with a slight gap. The developing roller 37 and the conveying screw, and the others are driven by a single motor (not shown) to rotate.

A predetermined developing bias is applied to the developing roller 37. The developing roller 37 rotates around the axis while carrying the developer, and conveys it to a position facing the photosensitive drum 11. The developer is transferred from the developing roller 37 to the photosensitive drum 11, and develops the electrostatic latent image formed on the surface of the photosensitive drum 11.

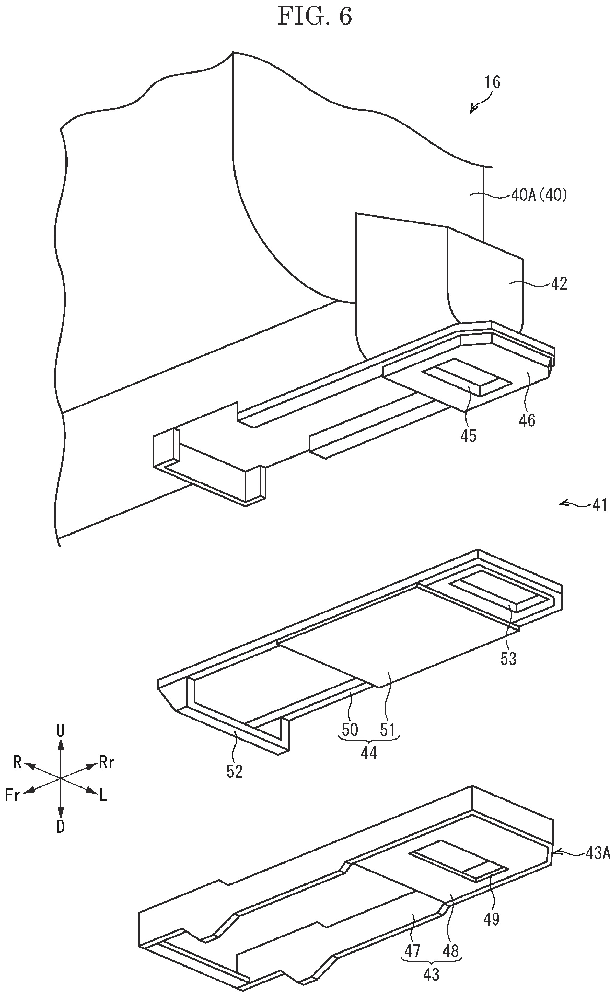

[Container] Next, with reference to FIG. 2 and FIG. 6, the container 16 will be described. FIG. 6 is a disassembled perspective view showing a container connection portion 41 of the container 16.

As shown in FIG. 2, the container 16 includes a container main body portion 40 which contains the replenishment developer and a container connection portion 41 which serves as the connection portion with the developing device 13.

<Container Main Body Portion> The container main body portion 40 is formed in a substantially rectangular parallelepiped shape elongated in the front-and-rear direction. The container main body portion 40 includes a container body 40A formed in a bathtub shape and a container lid portion 40B which closes the upper opening of the container body 40A. The developer is stored inside the container body 40A, and the container lid portion 40B is heat-sealed to the upper edge of the container body 40A. Inside the container body 40A, a stirring film (not shown) which stirs the developer is rotatably mounted around an axis extending in the front-and-rear direction.

<Container Connection Portion> As shown in FIG. 6, the container connection portion 41 includes a connection tube portion 42, a shutter holder 43, and a container shutter 44.

(Connection Tube Portion) The connection tube portion 42 is formed in a substantially tubular shape, and extends rearward from the lower left portion of the rear end surface of the container body 40A. A discharge port 45 is formed in the lower surface of the connection tube portion 42. The discharge port 45 is a hole penetrating the bottom plate of the connection tube portion 42 and is formed to have a shape substantially identical to the replenishment port 21 of the developing device 13. A container seal 46 is fixed to the lower surface of the connection tube portion 42, surrounding the discharge port 45. Inside the container body 40A and the connection tube portion 42, a container screw (not shown) for conveying the developer toward the discharge port 45 is rotatably mounted around an axis extending in the front-and-rear direction. The developer contained in the container 16 is discharged through the discharge port 45 and accommodated in the developing housing 20 (replenishment port 21).

(Shutter Holder) The shutter holder 43 is fixed to the lower surface of the connection tube portion 42 and slidably holds the container shutter 44. The shutter holder 43 includes a holder frame portion 47 formed in a substantially rectangular frame extending in the front-and-rear direction, and a holder surface portion 48 formed in a substantially rectangular plate closing the rear end portion of the holder frame portion 47. In the holder surface portion 48, a holder communication port 49 is opened, which is substantially the same shape as the discharge port 45. The holder communication port 49 is positioned to face the discharge port 45 from below. Furthermore, a holder inclined surface 43A is formed by cutting away the rear left corner of the shutter holder 43 obliquely. The holder inclined surface 43A is formed substantially parallel to the interlocking inclined surface 31A of the shutter 26 (contact interlocking portion 31).

(Container Shutter) The container shutter 44 includes a shutter frame portion 50 formed in a substantially rectangular frame extending in the front-and-rear direction, and a shutter surface portion 51 formed in a substantially rectangular plate closing approximately the rear half of the shutter frame portion 50. An interlocking interference portion 52 is provided extending downward from the front portion of the shutter frame portion 50. A shutter communication port 53 having substantially the same shape as the holder communication port 49 is opened on the rear portion of the shutter frame portion 50 that is rearward of the shutter surface portion 51. The container shutter 44 is fitted into the shutter holder 43, arranged between the lower surface of the connection tube portion 42 and the shutter holder 43, and held by the shutter holder 43 so as to be movable in the left-and-right direction. The container shutter 44 moves between a non-replenishable position P3 where the shutter surface portion 51 closes the discharge port 45 (holder communication port 49), and a replenishable position P4 where the shutter communication port 53 substantially aligns with the discharge port 45 (holder communication port 49). When the container shutter 44 is disposed at the non-replenishable position P3, the upper surface of the shutter surface portion 51 is in close contact with the lower surface of the container seal 46. Although not shown, a container-side biasing member (for example, a compression coil spring) is mounted between the front end surface of the shutter frame portion 50 and the front inner surface of the holder frame portion 47, and biases the container shutter 44 toward the non-replenishable position P3.

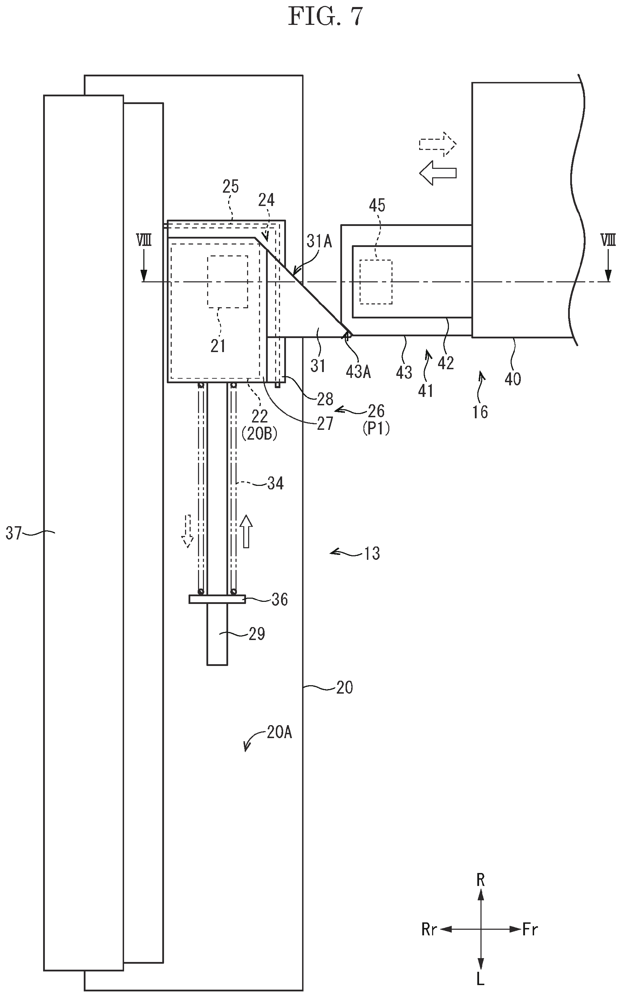

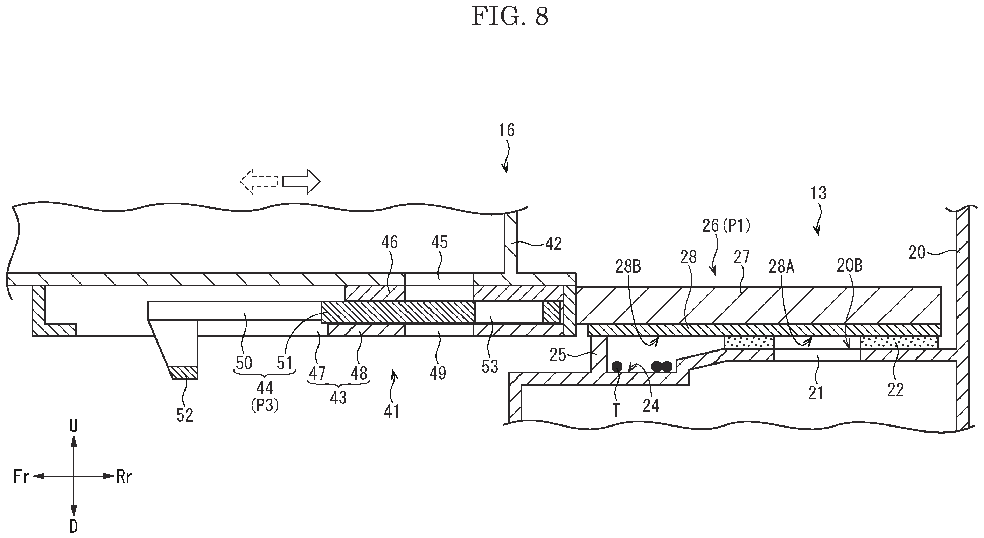

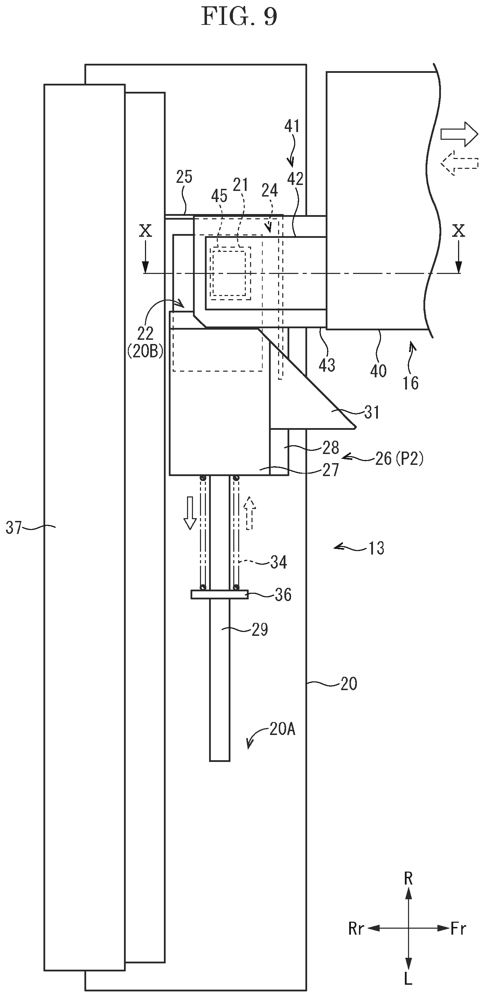

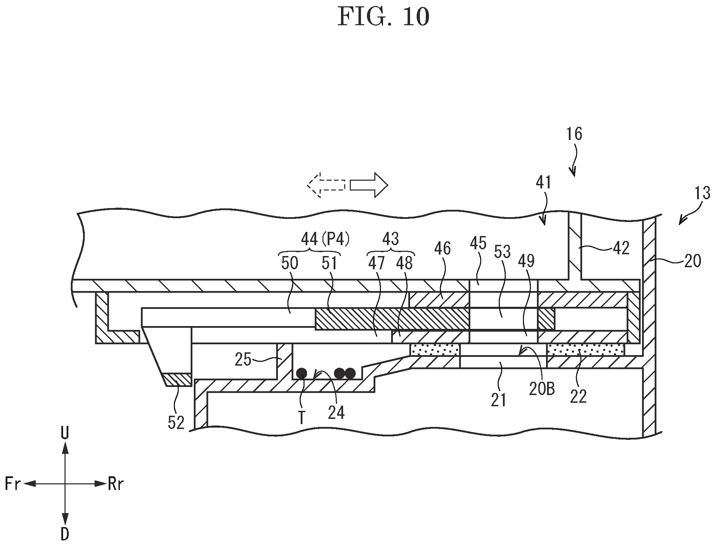

[Container Replacement] With reference to FIG. 7 to FIG. 10, the replacement operation (attachment and detachment operations) of the container 16 will be described. FIG. 7 is a plan view showing the state before connecting the container 16 to the developing device 13. FIG. 8 is a cross-sectional view taken along the line VIII-VIII of FIG. 7. FIG. 9 is a plan view showing the state after connecting the container 16 to the developing device 13. FIG. 10 is a cross-sectional view taken along the line X-X of FIG. 9. In this specification, the initial state is defined as the state where the container 16 is detached from the apparatus main body 2. In the initial state, the shutter 26 of the developing device 13 is biased by the biasing member 34 and positioned at the closed position P1 (see FIG. 7 and FIG. 8), and the container shutter 44 of the container 16 is biased by the container-side biasing member and disposed at the non-replenishable position P3 (see FIG. 8). The image forming process is stopped when replacing (attaching and detaching) the container 16.

<Attaching of Container> When the container 16 is attached to the apparatus main body 2, the operator opens the front cover of the apparatus main body 2 and pushes the container 16 rearward along the attachment/detachment rail. As the container 16 is pushed in, as shown in FIG. 7, the holder inclined surface 43A of the shutter holder 43 is in contact with the interlocking inclined surface 31A formed on the contact interlocking portion 31 of the shutter 26 of the developing housing 20. As the container 16 is pushed in further, the holder inclined surface 43A moves rearward while in contact with the interlocking inclined surface 31A, and moves the shutter 26 leftward (from the closed position P1 to the open position P2) against the biasing force of the biasing member 34. Thus, the contact interlocking portion 31 (interlocking inclined surface 31A) of the shutter 26 and the shutter holder 43 (holder inclined surface 43A) of the container 16 convert the movement of the container 16 in the front-and-rear direction into the movement of the shutter 26 in the left-and-right direction.

As the container 16 is pushed in further (the shutter 26 is further moved), as shown in FIG. 9 and FIG. 10, the replenishment port 21 of the developing housing 20 is exposed, and the container connection portion 41 enters the fixed area 20B (the upper surface of the sealing member 22). Additionally, the left end surface of the shutter holder 43 is in contact with the right end surface of the shutter support portion 27, and the lower surface of the shutter holder 43 (holder surface portion 48) is in contact with the upper surface of the sealing member 22. Note that a portion (left portion) of the shutter holder 43 rests on the upper surface of the shutter body portion 28.

As the container 16 is pushed in until the holder communication port 49 of the shutter holder 43 overlaps with the sealing member 22, the interlocking interference portion 52 of the container shutter 44 is in contact with the front end of the developing housing 20 (not shown). As the pushing in of the container 16, the container shutter 44 moves relatively forward (from the non-replenishable position P3 to the replenishable position P4).

When the container 16 is properly attached to the apparatus main body 2, the shutter 26 of the developing device 13 is disposed at the open position P2 (see FIG. 9), and the container shutter 44 of the container 16 is disposed at the replenishable position P4 (see FIG. 10). The holder communication port 49 of the shutter holder 43 substantially aligns with the replenishment port 21 of the developing housing 20, and the shutter communication port 53 of the container shutter 44 communicates the discharge port 45 of the connection tube portion 42 with the holder communication port 49 (see FIG. 10). This enables the replenishment of the developer from the container 16 to the developing housing 20.

<Detaching of Container> To detach the container 16 from the apparatus main body 2, the steps described above for attaching the container 16 to the apparatus main body 2 are performed in reverse order. Specifically, to detach the container 16 from the apparatus main body 2, the operator opens the front cover of the apparatus main body 2 and pulls the container 16 forward along the attachment/detachment rails. When the container 16 is pulled out, the holder inclined surface 43A moves forward while in contact with the interlocking inclined surface 31A, and the shutter 26 is moved rightward (from the open position P2 to the closed position P1) by the biasing force of the biasing member 34. Additionally, the container shutter 44 moves relatively rearward (from the replenishable position P4 to the non-replenishable position P3) by the biasing force of the container-side biasing member. As the pulling out of the container 16 progresses, the container shutter 44 is disposed at the non-replenishable position P3 (see FIG. 8). Subsequently, the container connection portion 41 is removed from the sealing member 22, and the shutter 26 moves while in contact with the upper surface of the sealing member 22 to be disposed at the closed position P1 (see FIG. 7 and FIG. 8). In this manner, the container 16 is detached from the apparatus main body 2.

[Contaminated Developer] Incidentally, when attaching the container 16 to the apparatus main body 2 or detaching it from the apparatus main body 2, the developer may leak slightly from the container 16 or the developing device 13. Furthermore, the image forming apparatus 1 may be laid on its side (turned by 90 degrees) to replace (maintain) the pair of conveying rollers 10, and the others. In such cases, the developer may also leak slightly from the connection portion between the container 16 and the developing device 13. This leaked developer (referred to as "the contaminated developer T" in the specification) may adhere, for example, to the upper surface 20A of the developing housing 20 (for example, the upper surface of the sealing member 22). When the replacement of the container 16 or the pair of conveying rollers 10 is repeated, there is a risk that the contaminated developer T adhering to developing device 13 may scatter and contaminate other devices, and the others, with the contaminated developer T. Therefore, the developing device 13 (image forming apparatus 1) according to this embodiment is provided with a structure which suppresses the scattering of contaminated developer T.

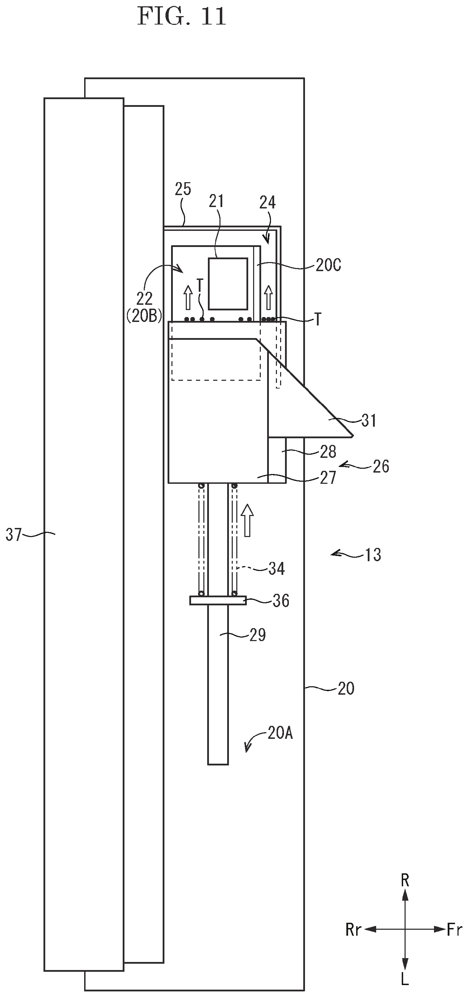

[Suppression of Scattering of Contaminated Developer] With reference to FIG. 7 to FIG. 11, the suppression of scattering of contaminated developer T, which leaks out during the replacement operation of the container 16 or the maintenance operation carried out by laying the image forming apparatus 1 on its side and adheres to the upper surface 20A of the developing housing 20 (the upper surface of the sealing member 22), will be described. FIG. 11 is a plan view showing the process of the shutter 26 moving toward the closed position P1. Note that the container 16 is not shown in FIG. 11.

<Suppression of Scattering of Contaminated Developer by Shutter> The function of suppressing the scattering of contaminated developer T by the shutter 26 is performed during the process of detaching the container 16 from the apparatus main body 2 and under the state where the container is detached.

As the container 16 is detached, when the shutter 26 moves from the open position P2 to the closed position P1, as shown in FIG. 11, the right end surface of the shutter body portion 28 (the downstream end surface of the shutter 26 moving toward the closed position P1) is in contact with the contaminated developer T adhering to the upper surface 20A of the developing housing 20 (the upper surface of the sealing member 22). The contaminated developer T is pressed by the right end surface of the shutter body portion 28 moving toward the closed position P1, enters the collection part 24, and is collected in the collection part 24. The contaminated developer T pressed by the shutter body portion 28 is mainly collected in the collection part 24 located in the right side. On the other hand, the contaminated developer T adhering to the front portion of the upper surface of the sealing member 22 falls along the inclined surface portion 20C during the process of being pressed by the shutter body portion 28, and is collected in the collection part 24 located in the front side.

As shown in FIG. 7 and FIG. 8, the shutter 26 disposed at the closed position P1 closes the collection part 24. Specifically, the collection closing surface 28B of the shutter body portion 28 is in close contact with the upper end surface of the collection rib 25, and closes the upper opening of the collection part 24. At this time, the seal contact surface 28A of the shutter body portion 28 is in close contact with the upper surface of the sealing member 22 to close the replenishment port 21. Furthermore, in this specification, the description that the shutter 26 "closes the upper opening of the collection part 24" does not require that the upper opening of the collection part 24 is completely closed, and also includes the that at least a portion of the upper opening (preferably more than half of the opening area) of the collection part 24 is closed.

As described above, when the shutter 26 moves toward the closed position P1 while pressing the contaminated developer T adhering to the upper surface 20A of the developing housing 20, the collection part 24 collects the contaminated developer T. According to this configuration, even if the contaminated developer T leaked from the container 16 or the developing housing 20 and adhered to the upper surface 20A of the developing housing 20 during the replacement of the container 16, the contaminated developer T can be collected and trapped within the collection part 24. This suppresses the scattering of contaminated developer T, and solves the problem that other devices installed inside the apparatus main body 2 are contaminated by the contaminated developer T. Furthermore, since the shutter 26 functions as a cover that seals the collection part 24, it can appropriately suppress the scattering of the contaminated developer T collected in the collection part 24.

<Suppression of Scattering of Contaminated Developer by Container> The function of suppressing the scattering of contaminated developer T by the container 16 is performed in the state where the container 16 is attached to the apparatus main body 2.

As shown in FIG. 9 and FIG. 10, when attached to the apparatus main body 2, the container 16 supplies the developer to the developing housing 20 via the replenishment port 21 while also closing the collection part 24. Specifically, when the container 16 is properly attached to the apparatus main body 2, the lower surface of the holder surface portion 48 of the shutter holder 43 is in contact (close contact) with the upper surface of the sealing member 22. Furthermore, the container connection portion 41 (shutter holder 43) is disposed to cover the upper opening of the collection part 24. In this specification, the description that the container 16 "closes the upper opening of the collection part 24" does not require that the upper opening of the collection part 24 is completely closed, and also includes the that at least a portion of the upper opening (preferably more than half of the opening area) of the collection part 24 is closed.

As described above, the container 16 attached to the apparatus main body 2 is configured to close the collection part 24 instead of the shutter 26. According to this configuration, since the container 16 functions as a cover closing the collection part 24, it can appropriately suppress the scattering of the contaminated developer T collected in the collection part 24.

In the developing device 13 of this embodiment, the collection part 24 is formed on the front side and the right side of the replenishment port 21 (fixed area 20B), but the present disclosure is not limited to this configuration. For example, the collection part 24 may be formed as a rectangular ring surrounding the entire replenishment port 21 (fixed area 20B, sealing member 22) (not shown). Furthermore, the collection part 24 may be formed along at least the right side of the replenishment port 21 (fixed area 20B), or in other words, along at least the edge of the replenishment port 21 downstream of the movement direction of the shutter 26 toward the closed position P1.

In the image forming apparatus 1 of this embodiment, the shutter 26 is moved from the closed position P1 to the open position P2 in conjunction with the attachment of the container 16 to the apparatus main body 2, and moved from the open position P2 to the closed position P1 in conjunction with the detachment of the container 16 from the apparatus main body 2. However, the present disclosure is not limited to this. For example, the shutter 26 may be manually opened and closed (moved) by an operator. That is, the operator may manually move the shutter 26 to the open position P2 before attaching the container 16 to the apparatus main body 2, or may manually move the shutter 26 to the closed position P1 after detaching the container 16 from the apparatus main body 2.

Furthermore, in the image forming apparatus 1 according to this embodiment, the container shutter 44 is moved from the non-replenishable position P3 to the replenishable position P4 in conjunction with the attaching the container 16 to the apparatus main body 2, and moved from the replenishable position P4 to the non-replenishable position P3 in conjunction with detaching the container 16 from the apparatus main body 2. However, the present disclosure is not limited to this. For example, the container shutter 44 may be manually opened and closed (moved) by an operator. That is, an operator may manually move the container shutter 44 to the replenishable position P4 after attaching the container 16 to the apparatus main body 2, or may manually move the container shutter 44 to the non-replenishable position P3 before detaching the container 16 from the apparatus main body 2.

Furthermore, while the description of the above embodiment illustrates an example of applying the present disclosure to a monochrome printer, it is not limited thereto. For example, the present disclosure may also be applied to color printers, multifunction devices, copiers, or facsimile machines.

## Claims

1. A developing device (13) comprising:
a developing housing (20) which has a replenishment port (21) formed on an upper surface and contains a developer flowing into through the replenishment port (21);
a shutter (26) which is provided on the upper surface of the developing housing (20) and moves between a closed position for closing the replenishment port (21) and an opening position for opening the replenishment port (21); and
a collection part (24) which is formed at least along an edge of the replenishment port (21) on a downstream side of a movement direction of the shutter (26) toward the closed position, wherein
when the shutter (26) moves toward the closed position while pressing a contaminated developer which is the developer adhered to the upper surface of the developing housing (20), the contaminated developer is collected by the collection part (24).

2. The developing device (13) according to claim 1, wherein
the shutter (26) disposed at the closed position closes the collection part (24).

3. The developing device (13) according to claim 1 or 2, comprising:
a sealing member (22) which is affixed to the upper surface of the developing housing (20) around the replenishment port (21), wherein
the collection part (24) is a space formed between the sealing member (22) and a collection rib (25) spaced away from the sealing member (22).

4. The developing device (13) according to claim 3, wherein
an upper surface of the collection rib (25)) has a same height as an upper surface of the sealing member (22).

5. An image forming apparatus (1) comprising:
the developing device (13) according to any one of claims 1 to 4.

6. The image forming apparatus (1) according to claim 5, further comprising:
a container (16) which is detachably provided to an apparatus main body (2) and contains the developer for replenishment, wherein
in a state where the container (16) is attached to the apparatus main body (2), the container (16) communicates with the developing housing (20) through the replenishment port (21) to supply the developer and closes the collection part (24).
